# EUROPEAN PATENT SPECIFICATION

(11) **EP 4 111 516 B1**
(45) Date of publication and mention of the grant of the patent: **06.12.2023**
(21) Application number: 21719707.8
(22) Date of filing: 27.02.2021
(51) Int. Cl.: H01M 8/04082, H01M 8/0444, H01M 8/04664, H01M 8/04746, H01M 8/04955, G01J 3/02, G01J 3/10, G01J 3/42, G01J 3/433, G01N 21/31, G01N 21/3581

(54) **FLOW-THROUGH PROTECTIVE SYSTEM OF HYDROGEN FUEL RECEIVER AND METHOD OF PROTECTION OF HYDROGEN FUEL RECEIVER**
DURCHFLUSSSCHUTZSYSTEM FÜR WASSERSTOFFBRENNSTOFFEMPFÄNGER UND VERFAHREN ZUM SCHUTZ EINES WASSERSTOFFBRENNSTOFFEMPFÄNGERS
SYSTÈME DE PROTECTION EN FLUX CONTINU D'UN RÉCEPTEUR DE CARBURANT HYDROGÈNE ET PROCÉDÉ DE PROTECTION D'UN RÉCEPTEUR DE CARBURANT HYDROGÈNE

(30) Priority: 29.02.2020 PL 43308820
(43) Date of publication of application: 04.01.2023
(73) Proprietor: Instytut Wysokich Cisnien Polskiej Akademii Nauk, 01-142 Warszawa (PL)
(72) Inventor: KNAP, Wojciech, 05-807 Podkowa Lesna (PL); SKOTNICKI, Tomasz, 02-786 Warszawa (PL)
(74) Representative: Bury, Marek
(86) International application number: PCT/IB2021/051661
(87) International publication number: WO 2021/171269

(56) References cited:
- DE-U1- 20 008 547
- JP-A- 2019 132 747
- US-A1- 2011 250 517
- US-A1- 2018 252 641
- US-A1- 2019 212 260
- FENG DONG ET AL: "Rapid, Online Quantification of H2S in JP-8 Fuel Reformate Using Near-Infrared Cavity-Enhanced Laser Absorption Spectroscopy", ANALYTICAL CHEMISTRY, vol. 83, no. 11, June 2011 (2011-06), pages 4132-4136, XP055434310, US ISSN: 0003-2700, DOI: 10.1021/ac200300t
- BACQUART THOMAS ET AL: "Hydrogen fuel quality from two main production processes: Steam methane reforming and proton exchange membrane water electrolysis", JOURNAL OF POWER SOURCES, ELSEVIER SA, CH, vol. 444, 22 October 2019 (2019-10-22), XP085920783, ISSN: 0378-7753, DOI: 10.1016/J.JPOWSOUR.2019.227170 [retrieved on 2019-10-22]

## Description

The invention concerns a flow-through protective system of hydrogen fuel receiver and a method of protection of hydrogen fuel receiver.

An exploitation of certain means of energy generation from hydrogen, in particular fuel cells, requires the use of hydrogen of very high purity. Even small concentrations of contaminants can translate into a reduction of failure-free operation time of the fuel cell or a progressive degradation of its parameters. This property of the fuel cells constitutes a significant reduction in a popularization of their use, due to the fact, that hydrogen is an easy subject to contamination - not only in a production process, but as well in storage, pumping and refuelling.

The most common contamination due to hydrogen reactivity and a presence of oxygen in atmosphere surrounding hydrogen infrastructure is water vapour. Water vapour contamination occurs easily during storage process and refuelling. Water vapour is not, however, the only contamination that translates negatively into exploitation of the fuel cells, and research in the scope of harmfulness of other substances is constantly carried out. It is difficult to predict its final result in a view of a relatively low - so far - dissemination of the fuel cells.

On fuel lines carrying hydrogen, measurement systems are used, which allow for detection of contaminants. An example of such system was disclosed in a publication of US patent application number US3258896A. On a main line carrying hydrogen a branching with pressure reduction was used and a flow of hydrogen was directed to a sensory unit, as shown in pos. 1. Such solution is not sufficient, because in case of contaminants detection, it does not provide a cut-off of supply of polluted hydrogen to its receiver, so that the receiver is exposed on a detrimental effect of those contaminants.

In the state-of-the-art protective systems of the fuel cells are known, in which on the fuel line a valve is provided and a sensory unit providing a signal allowing for a cut-off of hydrogen supply in case of detection of transgression of certain parameters and thus limiting the exposition of the fuel cell on harmful conditions. An example of such solution is known from a description of a Chinese patent application published as number CN101120477A and an American patent application number US20080318098A1, in which disclosed - pos. 2 - a flow-through system protecting the fuel cells comprising a line carrying hydrogen fuel, secured with a controllable valve, a central unit having a control output connected to a control input of the valve and inputs connected to the sensory unit, comprising a pressure sensor. In case of exceeding admissible value of pressure, hydrogen fuel is cut-off by means of the valve.

In the state-of-the-art numerous sensors and measurement systems are known, allowing for an analysis of gases composition. In particular, sensors providing a possibility of spectral analysis - subterahertz, terahertz and photonic are known. Such solutions were disclosed i.e. in American patent number US8748822B1, publications of international patent application WO2005095914A1 or WO2016050577A1. For analysis of composition or contamination of gases, fairly commonly spectrometers operating in different bands are used. A division is conventional, but due to the used technics of spectrum analysis, one distinguishes subterahertz spectrometers operating in a range of about 100 GHz to 1 THz, terahertz spectrometers operating in a range of about 1 THz to 10 THz and photonic spectrometers operating in a range of far infrared, infrared, visible radiation, or even ultraviolet.

A possibility of automated protection of receivers against contaminated hydrogen is considerably more difficult as a result of long time between getting a sample and a measurement result. In a solution according to US3258896A a sensor operating on the basis of measurement of a thermal resistance of gas present in the chamber was used. Such type of measurements last long enough, that potential contaminations flowing to the receiver in the course of the measurement may already have a significantly negative impact. In the case of refuelling a vehicle with the fuel cells, sensor operating time excludes smooth refuelling or makes the system useless.

An additional disadvantage of the sensor according to US3258896A is its low sensitivity, that problem was defined in this document and as a solution chromatographic sensors were indicated, and sensors operating on the basis of ionization phenomenon.

Maximal sensitivities indicated in US3258896A are single ppm (parts per million). Meanwhile, concentration of contaminants on the level higher than 10⁻⁶ in molar ratio could be already harmful. An automatic protection against contaminations in hydrogen fuel requires solving a problem of speed and sensitivity of the detection. Information concerning admissible content of contaminants is available in the standard 14687-2:2012 - a table of the contaminants is cited in pos. 3. Such detailed analysis is possible to be conducted at a stage of production or storage - however in a process of refuelling, detailed determination of concentrations of particular contaminants is very difficult. However in such processes, it is the easiest for contamination by water vapour to occur. US2019212260A1 discloses a method and device for monitoring the quality of gaseous media using spectrometer, and measurements in the chamber closed with two valves is discussed in FENG DONG ET AL: "Rapid, Online Quantification of H2S in .JP-8 Fuel Reformate Using Near-Infrared Cavity-Enhanced Laser Absorption Spectroscopy", ANALYTICAL CHEMISTRY, ACS, US, vol. 83, no. 11, June 2011, pages 4132-4136, XP055434310, ISSN: 0003-2700, DOI: 10.1021/a0200300t

It is an object of the invention to provide a protective system allowing for cutting off a supply of contaminated hydrogen to a receiver, detecting molar concentrations at the level of the order of 1 ppm and providing results in time allowing for smooth refuelling and repumping gas.

A flow-through protective system of hydrogen fuel receiver comprising a line for carrying hydrogen fuel, secured with a protective valve, wherein on the line a branching unit is provided, conveying a part of the hydrogen fuel to a sensory unit, and a control unit receiving on an input a signal from the sensory unit and having an output connected to a control input of the protective valve, according to the invention is characterized in that the sensory unit comprises a measuring chamber with a semiconductor sensor with an operating band falling within the range of 100 GHz to 1000 GHz and at least one sensor chosen from the group comprising a terahertz or photonic spectrometer. Between the branching unit and the sensory unit is a first valve whereas an outlet of the first valve is connected to an inlet of the measuring chamber of the sensory unit and an outlet of the measuring chamber is secured with a second controllable valve, to which a pump is connected. Such configuration enables carrying out accurate spectrometric gas measurements by means of the subterahertz, terahertz or photonic spectrometer, simultaneously guaranteeing stable measuring conditions independent of the state of the gas in the line and optimizing for sensitivity.

Advantageously, the system comprises an alarm signalling device connected to the control unit. Consequently, in addition to securing the receiver, it is possible to notify supervisors about the contamination.

As, the sensory unit comprises a subterahertz semiconductor sensor with an operating band falling within the range of 100 GHz to 1000 GHz it is fast and comprise a spectral range allowing for detection of significant subset of contaminants which can typically occur in hydrogen.

Advantageously, the sensory unit comprises a spectrometric terahertz sensor, with an operating band falling within the range of 1 THz to 3 THz. This spectral range allows for detecting significant subset of contaminants which can typically occur in hydrogen.

Advantageously, the system comprises a tight measuring chamber in which there is a first subterahertz semiconductor sensor with an operating band falling within the range of 100 GHz to 1000 GHz and a second sensor - terahertz spectrometer with an operating band falling within the range of 1 THz to 3 THz. Using two sensors simultaneously increases the certainty of contamination detection.

A method of protection of hydrogen fuel receiver comprising a detection of transgression of parameters and cutting off supply of hydrogen by closing a controllable valve, according to the invention is characterized in that a system according to the invention is used to carry out measurement by regulating conditions inside the chamber of the sensory unit by means of the first valve and/or the second valve and the pump and then the sensor is started and a result is recorded, and hydrogen supply in the line is cut off if molar concentration of contaminants is detected above a predefined value.

Between measurements, hydrogen is pumped out of the working chamber of the sensory unit and before measurement, the first valve is opened up to achieving appropriate measuring pressure read from a manometer, then the sensor is activated and a result is recorded, whereupon the second valve is opened and by means of the pump hydrogen is pumped out of the chamber of the sensory unit. Such method facilitates securing subsequent measurements against distortion due to disturbance of the gas state by subterahertz spectrometer.

The measurement system further allows, by measuring pressure continuously by means of the manometer, opening of the first valve and operating of the pump and/or the second valve is regulated in order to achieve a state of vacuum with dynamic flow in the measuring chamber of the sensory unit. Such method is more stable and ensures better control of the state of the gas and the measurement speed.

Advantageously, the cut off of hydrogen is signalized by sending an alarm signal and a predefined value advantageously corresponds to the molar concentration of 1e-6.

According to the invention, two sensors are used, by means of which the measurement is carried out sequentially. At least one sensor constitutes a semiconductor subterahertz spectrometer, with operating band falling within the range of 100 GHz to 1000 GHz and the measurement by means of this sensor is carried out as the last.

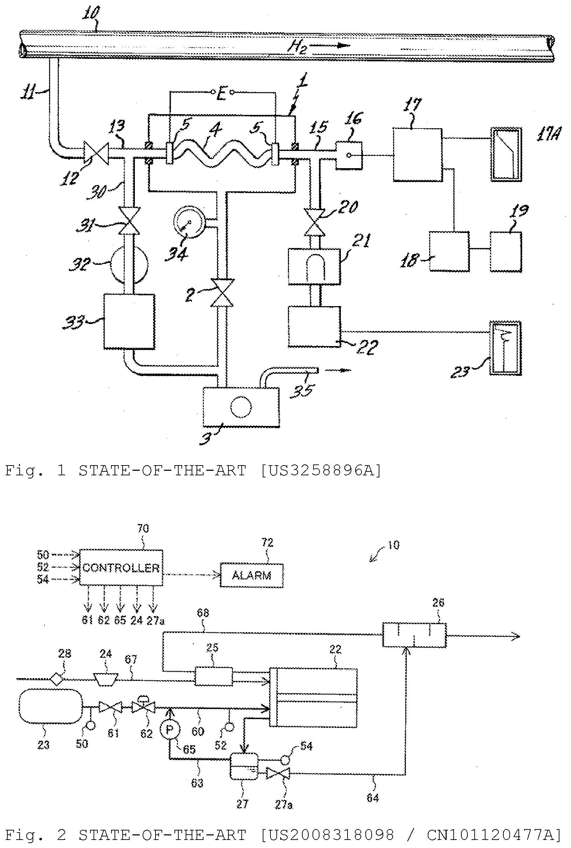

The invention has been discussed in details with reference to the following figures showing embodiments of the invention
- Fig. 1: shows a block diagram of a protective system from state-of-the-art;
- Fig. 2: shows a block diagram of a protective system from state-of-the-art;

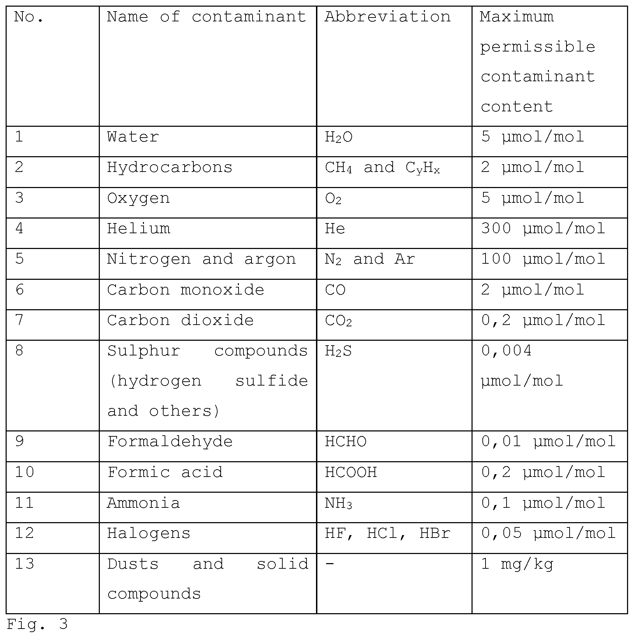

- Fig. 3: shows a table with a summary of acceptable levels of contaminations;
- Fig. 4a: shows a block diagram of the protective system according to an embodiment the invention;
- Fig. 4b: shows a block diagram of the protective system according to an alternative embodiment the invention;
- Fig. 5: shows schematically a measuring chamber with sensors in a sensory unit according to an embodiment the invention.

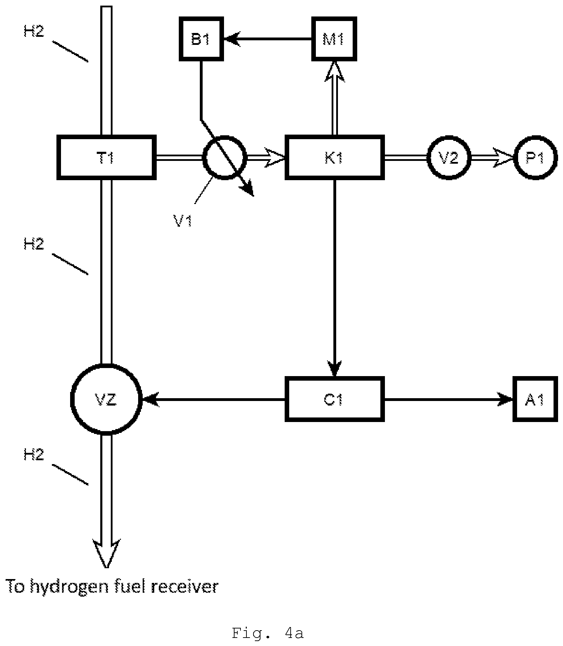

A block diagram of the device constituting an embodiment of the invention of the protective system against contaminations in hydrogen fuel was shown in Fig. 4a. The protective system comprising a line **H2** to carry hydrogen fuel to the receiver is closable with a controllable protective valve **VZ.** On the line **H2** a branching unit **T1** is provided, discharging a part of hydrogen fuel to a sensory unit **K1,** comprising a measuring chamber with a sensor. Good results were obtained by using subterahertz semiconductor sensor with an operating band falling within the range of 100 GHz to 1000 GHz. The sensory unit **K1** is situated between two valves, a first valve **V1** and a second valve **V2,** so that the measurement can be done in the conditions fixed at that time. For measuring pressure in the measuring chamber a manometer **M1** is used. As the first valve **V1** a needle valve with control unit of the valve **B1** connected to manometer **M1** was used. Owing to that, it is possible to measure out proper pressure from the line **H2** regardless of the prevailing current conditions in the line **H2:** pressure and flow rate. Consequently, by measuring out the gas via the first valve **V1,** the measurement result is made independent of the pressure changes in the line **H2.** Using a system of the electronic controllable valves and the pump **P1** allows for precise pressure adjustment.

Pressures in the range of 5 to 20 mbar performed well. Additionally, a unit maintaining a constant temperature in the chamber of the sensory unit **K1** was used, operating under the control of the control unit **C1.**

Good effects were obtained also with the terahertz sensor, with the band falling in the range of 1 THz to 3THz. Terahertz sensors showed higher sensitivity and the ability to distinguish wider spectrum of contaminant substances, although the measurement by means of them lasts longer. Those are complementary sensors which can be better for some contaminants. However, often they are less stable than subterahertz sensors based only on electronic sources and detectors, in which lasers are not used.

The sensory unit **K1** is connected to the control unit **C1** generating a control signal for the protective valve **VZ.** Protection of hydrogen fuel receiver lies in that by means of the control unit **C1,** a signal closing the controllable valve **VZ** is generated, in the situation when by means of the sensory unit **K1** unacceptable concentrations of contaminants are detected. Additionally, the protective system is optionally provided with a signaling device **A1,** which triggers itself closing the controllable valve **VZ.** The control unit **C1** can be also used for controlling the pump **P1.**

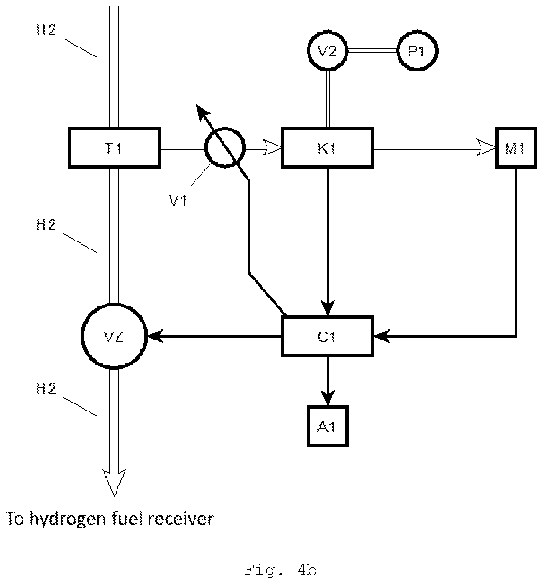

Supplying a signal to the control unit **C1** from the manometer **M1** allows for consideration of pressure in determination of the measurement result and also for carrying out the measurements for different pressure values. Control unit **C1** can be also used for controlling the first valve **V1.** Such configuration is shown in Fig. 4b. Coupling the first valve with the manometer **M1** - via the control unit of the valve **B1** or via the control unit **C1** allows for measuring out pressure in addition to the operating of the pump **P1.** Using of it facilitates the proper choice of pressure and allows for pumping-out measured gas and repeating the measurement in pressure conditions significantly below atmospheric pressure.

The system according to the invention can operate in a continuous mode or in a sequential mode.

In the sequential mode the system according to the invention operates in a cycle, in which in the chamber of the sensory unit **K1** closed from the both sides by the first valve **V1** and second valve **V2,** initially there is a vacuum, then the unit is filled with hydrogen measured out by means of the first valve **V1** opening for the short time - if necessary, several times - up to achieving proper measuring pressure. Then, the measurement is carried out and the result is recorded, after which the second valve **V2** is opened and by means of the pump **P1** hydrogen is pumped out, achieving vacuum in the measuring chamber again. The measurement can be repeated, achieving a sampling effect of contamination concentration in real time.

However, in the continuous mode, the first needle valve **V1** is opened partially, simultaneously enforcing the operation of the pump **P1.** The range of the opening of the first needle valve **V1** and pump thrust is regulated so that in the chamber of the sensory unit arises so called vacuum with dynamic flow. Good and stabilized value of the dynamic vacuum is obtained via electronic control of the first needle valve **V1** or both valves - the first valve **V1** and the second valve **V2.** Such configuration proved to be particularly advantageous. It can be maintained even via a simple coupling of the first valve **V1** with the manometer and simultaneously the vacuum with dynamic flow provides continuous gas exchange and stable state of favourable measurement conditions.

Such configuration enables automatization of safeguards. Subterahertz, terahertz and photonic spectrometers proved to be fast enough and sensitive enough. Using such spectrometers in the arrangement of the mirrors placed opposite to each other, enables performing measurements in the working chamber, in which a radiation beam repeatedly sweeps the same gas sample. Thanks to this, for the detection of most contaminants, pre-concentration is not necessary, or other time-consuming processes required for determining and detecting small concentrations of contaminations.

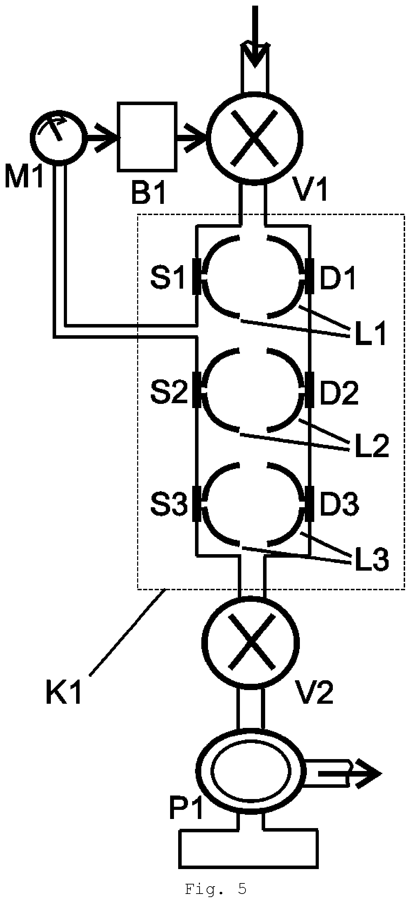

Very good results were obtained by simultaneous use in the sensory unit of two or even three spectrometers operating in the same measuring chamber of the sensory unit **K1.** A scheme of the measuring chamber of the sensory unit **K1** with three spectrometers is shown in Fig. 5 together with the first valve **V1** and the second valve **V2.**

The measuring chamber of the sensory unit **K1** shown schematically in Fig 5 consists of vacuum quartz tube having an internal diameter of 42 mm and a length of L = 1 m, together with quartz windows, in which sources **S1, S2, S3** and detectors **D1, D2, D3** of particular spectrometers are placed. The chambers that type are commonly used in spectroscopy, due to low interference level, weak chemical activity and sorption activity of quartz as well as a possibility of fast and effective cleansing of the chamber during heating and vacuum pumping. In this case, some losses caused by transfer through electromagnetic wave scattering plays a beneficial role, reducing an effect of interference related to multiple radiation reflections from walls and ends of the chamber. The person skilled in art is able to routinely propose alternative solutions, for example teflon windows can be used, mylar windows or other adjusted to the measurement range.

The terahertz spectrometer was used as the first spectrometer, with the source **S1** and the detector **D1,** placed next to the openings in the chamber windows of the system of the spectrometers **K1** and next to the openings in the mirrors **L1,** using signal mixing and operating in the band falling within the range of 1 THz to 3 THz. An example of the applicable spectrometer is disclosed in the publication C. Hepp, S. Lüttjohann, A. Roggenbuck, A. Deninger, S. Nellen, T. Göbel, M. Jörger1 and R. Harig1 entitled "A cw-Terahertz Gas Analysis System with ppm Detection Limits". Such spectrometers are currently offered by the Toptica company.

As the second spectrometer, the photonic spectrometer operating in the time domain was used, with the source **S2** and the detector **D2,** placed next to the openings in the windows of the chamber of the system of the spectrometers **K1** and next to the openings in the mirrors **L2.**

As the third spectrometer was used aforementioned semiconductor subterahertz spectrometer, with the operating band falling within the range of 100 GHz to 1000 GHz. That spectrometer allows for determining of gas concentration and fast analysis of the mixture of gases on the basis of the absorption changes and radiation emission by particles included in gas composition. Radiation frequency range analyzing the gas composition is chosen so to cover characteristic absorption lines of contaminants and thus it enables for identifying and differentiating those gases in contaminated hydrogen. The research is carried out by using the optical chamber (optical cavity), provided in the chamber of the sensory unit **K1** located between mirrors **L3.** In the chamber controlled conditions are provided: pressure, volume, temperature suitable for absorption analysis and radiation emission. Measurement process is controlled by the control unit **C1.** Absolute values of the absorption/emission coefficient are not subject to the direct measurement, but their changes caused by phase switching and/or radiation frequency - temporary effect. Sensitivity of spectrometers based on the temporary effects is approaching to the theoretical limits and their resolution is limited by the Doppler effect only, which is practically non-existent in the system closed by valves from the both sides - by the first valve **V1** and by the second valve **V2.** A spectrometer with a variable frequency can be used - e.g. disclosed in V. Vaks, E. Domracheva, E. Sobakinskaya, and M. Chernyaeva, "High precise terahertz spectroscopy for noninvasive medicine diagnostics," Photonics & Lasers in Medicine, vol. 3, no. 4, pp. 373-380, Sept. 2014 or spectrometer with variable phase disclosed in the article V. L. Vaks, E. G. Domracheva, E. A. Sobakinskaya, and M. B. Chernyaeva, "Exhaled breath analysis: physical methods, instruments, and medical diagnostics," Physics - Uspekhi, vol. 57, no. 7, pp. 684-701, July 2014.

The sources **S1, S2, S3** and the detectors **D1, D2, D3** are connected to the control unit **C1** and they are operating under its control. The connections are not shown in the figures for simplification. The control unit **C1** serves both to trigger the source operation as well as to receive and process measurement results and control operation of the valves. By using the set of the spectrometers it is important that, subterahertz spectrometer to be activated in every trial as the last because its operation activates gas and affects the operation of the remaining spectrometers.

For the spectrometer operating in sweeping frequency mode, the accuracy during determination of the instantaneous value of frequency of the radiation source shall not exceed 10⁻⁶. Such accuracy is achieved by means of the arrangement of the phased-locked loop PLL. The control signal of the frequency of the source is placed on a dedicated reference input. PLL for the source/generator is carried out with a reference synthesizer having high frequency stability. 16-bit high speed converter is used to form of a sweeping signal (in order to obtain a shape of control voltage close to triangular) of control frequency sweeping for signal generator submitted to duplication for achieving measuring radiation of the source **S3.** Module of the detector **D3** comprises a recording camera on the basis of the waveguide detector with a Schottky diode, a low-noise preamplifier with a bias circuit of the detector and a low-pass filter (LPF). By measuring rectified direct current (DC) of the detector (on the input of LPF), it is possible to determine intensity of spectral lines without any preliminary calibrations. The signal from the preamplifier reaches the input of a very fast analog-to-digital converter, and then to a very fast digital memory, in which spectroscopic signals are summed and averaged. Then, data is transferred to the control unit **C1,** where averaging can be continued. Consistent signal collection allows for increasing of the signal-to-noise ratio, and therefore the sensitivity of the spectroscopic measurements.

Practiced permissible value of the contamination is 10⁻⁶, also written as 1e-6 or 1 ppm. It was experimentally found, that the usage of the fuel cells connected with accumulation in such concentrations does not differ from the usage of other components, therefore it does not translate into a drastic reduction in the fuel cell lifetime. Other hydrogen fuel receivers are characterized by other sensitivity. With the development and the improvement of the fuel cells it is not excluded, that increase in reliability of other elements will enforce even more stringent requirements for hydrogen purity. Additionally, in regard to relatively low popularization of the fuel cells, effect of individual substances on the hydrogen fuel receivers has not been well studied yet. Standard 14687-2:2012 constructed in this field is troublesome to be implemented due to difficulties in measuring in real time of all of the contaminations indicated therein - instead an aggregated working value of 1e-6 is used. Using in the sensory unit both spectrometers: subterahertz spectrometer and terahertz spectrometer provides such an option.

According to the invention, depending on needs, it is possible to use a whole group of spectrometric optical sensors, including infrared (near infrared and far infrared), and ultraviolet, as well as for visible band. The sensitivity of the device can be also additionally increased by using a concentration unit before the sensory unit **K1.**

## Claims

1. A flow-through protective system of a hydrogen fuel receiver comprising
a line (**H2**) for carrying hydrogen fuel,
secured with a protective valve (**VZ**), wherein on the line (**H2**) a branching unit (**T1**) is provided, for conveying a part of the hydrogen fuel to
a sensory unit (**K1**), and
a control unit (**C1**) receiving on an input a signal from the sensory unit (**K1**) and having an output connected to a control input of the protective valve (**VZ**),
**characterized in that**
the sensory unit (**K1**) comprises a measuring chamber with a subterahertz semiconductor sensor with an operating band falling within the range of 100 GHz to 1000 GHz and at least one sensor chosen from the group comprising: terahertz and photonic spectrometer,
it has a first valve (**V1**) between the branching unit (**T1**) and the sensory unit (**K1**), and an outlet of the first valve (**V1**) is connected to an inlet of the measuring chamber of the sensory unit (**K1**) and an outlet of the measuring chamber is secured with a second controllable valve (**V2**), to which a pump (**P1**) is connected
wherein
the control unit (**C1**) is adapted to trigger measurement in sequential mode so that the system operates in a cycle, in which, for measurement, the chamber of the sensory unit **K1** is closed from the both sides by the first valve **V1** and second valve **V2** and filled with hydrogen under measuring pressure and after measurement the hydrogen is pumped out by means of the pump **P1**, wherein the measurement with a subterahertz semiconductor sensor in every cycle is triggered the last.

2. The flow-through protective system according to claim 1, **characterized in that** it comprises an alarm signalling device (**A1**) connected to the control unit (**C1**).

3. The flow-through protective system according to claim 1 or 2, **characterized in that** the sensory unit (**K1**) comprises an optical sensor being a spectrometer with an operating band falling within the range of 1 THz to 3 THz.

4. A method of protection of a hydrogen fuel receiver comprising a detection of transgression of parameters and cutting off supply of hydrogen by closing a controllable valve, **characterized in that** a system as described in any of claims from 1 to 3 is used for a measurement which is carried out by regulating conditions inside the chamber of the sensory unit (**K1**) by means of the first valve (**V1**) and/or the second valve (**V2**) and the pump (**P1**) and then the sensor is started and a result is recorded, and hydrogen supply in the line (**H2**) is cut off if the molar concentration of contaminants is detected above a predefined value, wherein two sensors are used, by means of which the measurement is carried out sequentially, and at least one sensor constitutes a semiconductor subterahertz sensor, with operating band falling within the range of 100 GHz to 1000 GHz and the measurement by means of this sensor is carried out as the last in the sequence.

5. The method according to claim 4, **characterized in that** between measurements, hydrogen is pumped out of the working chamber of the sensory unit (**K1**) and before measurement the first valve (**V1**) is opened up to achieving appropriate measuring pressure read from a manometer (**M1**), then the sensor is activated and a result is recorded, whereupon the second valve (**V2**) is opened and by means of the pump (**P1**) hydrogen is pumped out of the chamber of the sensory unit (**K1**).

6. The method according to claim 4 or 5, **characterized in that** the cut off of hydrogen is signalized by sending an alarm signal.

7. The method according to claim 4 or 5 or 6, **characterized in that** the predefined value corresponds to the molar concentration of 1e-6.

## Patentansprüche

1. Durchflussschutzsystem eines Wasserstoffkraftstoffempfängers umfassend:
eine Leitung (**H2**) zum Führen von Wasserstoffkraftstoff,
die mit einem Schutzventil (**VZ**) gesichert ist, wobei an der Leitung (**H2**) eine Verzweigungseinheit (**T1**) vorgesehen ist, um einen Teil des Wasserstoffkraftstoffs zu
einer Sensoreinheit (**K1**), und
einer Steuereinheit (**C1**) zu leiten, die an einem Eingang ein Signal von der Sensoreinheit (**K1**) empfängt und einen Ausgang aufweist, der mit einem Steuereingang des Schutzventils (**VZ**) verbunden ist,
**dadurch gekennzeichnet, dass**
die Sensoreinheit (K**1**) eine Messkammer mit einem Subterahertz-Halbleitersensor mit einem Betriebsband, das in den Bereich von 100 GHz bis 1000 GHz fällt, und mindestens einen Sensor umfasst, der aus der Gruppe ausgewählt ist, die Terahertz- und photonisches Spektrometer umfasst,
es ein erstes Ventil (**V1**) zwischen der Verzweigungseinheit (**T1**) und der Sensoreinheit (**K1**) aufweist und ein Ausgang des ersten Ventils (**V1**) mit einem Eingang der Messkammer der Sensoreinheit (**K1**) verbunden ist und ein Ausgang der Messkammer mit einem zweiten steuerbaren Ventil (**V2**) gesichert ist, mit dem eine Pumpe (P1) verbunden ist,
wobei
die Steuereinheit (**C1**) dazu ausgelegt ist, die Messung in sequenzieller Weise auszulösen, so dass das System in einem Zyklus arbeitet, in dem zur Messung die Kammer der Sensoreinheit (**K1**) von beiden Seiten durch das erste Ventil (**V1**) und das zweite Ventil (**V2**) geschlossen und mit Wasserstoff unter Messdruck gefüllt ist und nach der Messung der Wasserstoff mittels der Pumpe (**P1**) abgepumpt wird, wobei die Messung mit einem Subterahertz-Halbleitersensor in jedem Zyklus zuletzt ausgelöst wird.

2. Durchflussschutzsystem nach Anspruch 1, **dadurch gekennzeichnet, dass** es eine Alarmsignalisierungsvorrichtung (**A1**) umfasst, die mit der Steuereinheit (**C1**) verbunden ist.

3. Durchflussschutzsystem nach Anspruch 1 oder 2, **dadurch gekennzeichnet, dass** die Sensoreinheit (**K1**) einen optischen Sensor umfasst, der ein Spektrometer mit einem Betriebsband ist, das in den Bereich von 1 THz bis 3 THz fällt.

4. Verfahren zum Schutz eines Wasserstoffkraftstoffempfängers, umfassend eine Detektion von Parameterüberschreitungen und Unterbrechen der Zufuhr von Wasserstoff durch Schließen eines steuerbaren Ventils, **dadurch gekennzeichnet, dass** ein System, wie in einem der Ansprüche 1 bis 3 beschrieben, für eine Messung verwendet wird, die durch ein Regeln von Bedingungen innerhalb der Kammer der Sensoreinheit (**K1**) mittels des ersten Ventils (**V1**) und/oder des zweiten Ventils (**V2**) und der Pumpe (**P1**) durchgeführt wird, und dann der Sensor gestartet wird und ein Ergebnis aufgezeichnet wird und die Wasserstoffzufuhr in der Leitung (**H2**) unterbrochen wird, wenn die molare Konzentration von Verunreinigungen über einem vordefinierten Wert detektiert wird, wobei zwei Sensoren verwendet werden, mittels derer die Messung nacheinander durchgeführt wird, und mindestens ein Sensor einen Subterahertz-Halbleitersensor darstellt, mit einem Betriebsband, das in den Bereich von 100 GHz bis 1000 GHz fällt, und die Messung mittels dieses Sensors als der letzte in der Reihenfolge durchgeführt wird.

5. Verfahren nach Anspruch 4, **dadurch gekennzeichnet, dass** zwischen den Messungen Wasserstoff aus der Arbeitskammer der Sensoreinheit (**K1**) abgepumpt wird und vor der Messung das erste Ventil (**V1**) geöffnet wird, bis ein geeigneter Messdruck erreicht wird, der von einem Manometer (**M1**) gelesen wird, dann der Sensor aktiviert wird und ein Ergebnis aufgezeichnet wird, woraufhin das zweite Ventil (**V2**) geöffnet wird und mittels der Pumpe (**P1**) Wasserstoff aus der Kammer der Sensoreinheit (**K1**) abgepumpt wird.

6. Verfahren nach Anspruch 4 oder 5, **dadurch gekennzeichnet, dass** die Unterbrechung von Wasserstoff durch Senden eines Alarmsignals signalisiert wird.

7. Verfahren nach Anspruch 4 oder 5 oder 6, **dadurch gekennzeichnet, dass** der vordefinierte Wert der molaren Konzentration von 1e-6 entspricht.

## Revendications

1. Système de protection à flux continu d'un réservoir d'hydrogène comprenant
une conduite (**H2**) pour transporter de l'hydrogène, sécurisée par une vanne de protection (**VZ**), dans lequel une unité de dérivation (**T1**) est prévue sur la conduite (**H2**) pour acheminer une partie de l'hydrogène vers
une unité sensorielle (**K1**), et
une unité de commande (**C1**) recevant en entrée un signal de l'unité sensorielle (**K1**) et ayant une sortie connectée à une entrée de commande de la vanne de protection (**VZ**),
**caractérisé en ce que**
l'unité sensorielle (**K1**) comprend une chambre de mesure avec un capteur semi-conducteur subterahertz avec une bande de fonctionnement comprise entre 100 GHz et 1 000 GHz et au moins un capteur choisi dans le groupe comprenant : un spectromètre térahertz et photonique,
il comporte une première vanne (**V1**) entre l'unité de dérivation (**T1**) et l'unité sensorielle (**K1**), et une sortie de la première vanne (**V1**) est reliée à une entrée de la chambre de mesure de l'unité sensorielle (**K1**) et une sortie de la chambre de mesure est sécurisée par une deuxième vanne (**V2**) contrôlable, à laquelle est reliée une pompe (**P1**)
dans lequel
l'unité de commande (**C1**) est adaptée pour déclencher la mesure en mode séquentiel de sorte que le système fonctionne selon un cycle, dans lequel, pour la mesure, la chambre de l'unité sensorielle (**K1**) est fermée des deux côtés par la première vanne (**V1**) et la deuxième vanne (**V2**) et remplie d'hydrogène sous la pression de mesure et, après la mesure, l'hydrogène est pompé vers l'extérieur au moyen de la pompe (**P1**), dans lequel la mesure avec un capteur semi-conducteur subterahertz dans chaque cycle est déclenchée en dernier.

2. Système de protection à flux continu selon la revendication 1, **caractérisé en ce qu'**il comprend un dispositif de signalisation d'alarme (**A1**) connecté à l'unité de commande (**C1**).

3. Système de protection à flux continu selon la revendication 1 ou 2, **caractérisé en ce que** l'unité sensorielle (**K1**) comprend un capteur optique qui est un spectromètre dont la bande de fonctionnement se situe entre 1 THz et 3 THz.

4. Procédé de protection d'un réservoir d'hydrogène comprenant la détection de la transgression de paramètres et la coupure de l'alimentation en hydrogène par la fermeture d'une vanne qui peut être commandée, **caractérisé en ce qu'**un système tel que décrit selon l'une quelconque des revendications 1 à 3 est utilisé pour une mesure qui est effectuée en régulant les conditions à l'intérieur de la chambre de l'unité sensorielle (**K1**) au moyen de la première vanne (**V1**) et/ou de la deuxième vanne (**V2**) et de la pompe (**P1**), puis le capteur est mis en marche et un résultat est enregistré, et l'alimentation en hydrogène dans la conduite (**H2**) est coupée si la concentration molaire de contaminants est détectée au-dessus d'une valeur prédéfinie, dans lequel deux capteurs sont utilisés, au moyen desquels la mesure est effectuée séquentiellement, et au moins un capteur constitue un capteur subterahertz à semi-conducteur, avec une bande de fonctionnement comprise entre 100 GHz et 1 000 GHz, et la mesure au moyen de ce capteur est effectuée en dernier dans la séquence.

5. Procédé selon la revendication 4, **caractérisé en ce qu'**entre les mesures, l'hydrogène est pompé hors de la chambre de travail de l'unité sensorielle (**K1**) et qu'avant la mesure, la première vanne (**V1**) est ouverte jusqu'à atteindre la pression de mesure appropriée lue sur un manomètre (**M1**), puis le capteur est activé et un résultat est enregistré, après quoi la deuxième vanne (**V2**) est ouverte et, au moyen de la pompe (**P1**), l'hydrogène est pompé hors de la chambre de l'unité sensorielle (**K1**).

6. Procédé selon la revendication 4 ou 5, **caractérisé en ce que** la coupure d'hydrogène est signalée par l'envoi d'un signal d'alarme.

7. Procédé selon la revendication 4 ou 5 ou 6, **caractérisé en ce que** la valeur prédéfinie correspond à la concentration molaire de 1e-6.
